# EUROPEAN PATENT SPECIFICATION

(11) **EP 2 447 509 B1**
(45) Date of publication and mention of the grant of the patent: **07.06.2017**
(21) Application number: 11174978.4
(22) Date of filing: 22.07.2011
(51) Int. Cl.: F02C 9/20, F02C 9/54, F02C 9/28, F02C 3/10, F02C 9/34, F02C 9/26

(54) **Combuster control method and combustor controller**
Brennersteuerungsverfahren und Brennersteuerung
Procédé de contrôle de chambre de combustion et contrôleur de chambre de combustion

(30) Priority: 23.07.2010 JP 2010166250
(43) Date of publication of application: 02.05.2012
(73) Proprietor: Mitsubishi Hitachi Power Systems, Ltd., Yokohama 220-8401 (JP)
(72) Inventor: Saito, Nozomi, Tokyo 100-8220 (JP); Saito, Takeo, Tokyo 100-8220 (JP); Nanataki, Kenji, Tokyo 100-8220 (JP)
(74) Representative: MERH-IP Matias Erny Reichl Hoffmann Patentanwälte PartG mbB

(56) References cited:
- EP-A2- 0 279 487
- EP-A2- 2 143 908
- US-A1- 2010 175 385

## Description

### BACKGROUND OF THE INVENTION

### 1. Field of the Invention

The invention particular relates to a combustor control method and a combustor controller suitable for the combustion control of dry low-NOx combustors for multi-shafts gas turbine that is equipped with a premixed combustion unit.

### 2. Description of the Related Art

Generally as to gas turbine combustors with a plurality of premixed combustion units, it is known to estimate the combustion temperature from various state quantities of the gas turbine and thereby switches the combustion mode to the premixed combustion in order to achieve stable combustion and reduction of NOx emission (see JP-2006-29162-A, for example).

Also another known combustor is designed to carry out the transferring to the premixed combustion for the purpose of achieving the stable combustion and the NOx emission reduction based on fuel flow demand in a systematic manner (see JP-2001-263095-A, for example).

Further, EP 2 143 908 A2 describes a twin-shaft gas turbine, which has a gas generator including a compressor, a combustor, and a high-pressure turbine, is configured to make a first control mode and a second control mode selectively useable for control of the gas generator. In addition, in the first control mode, an IGV angle in the compressor is controlled in accordance with a corrected shaft rotation speed of the gas generator, and in the second control mode, the IGV angle is controlled to maintain a constant gas generator shaft rotation speed.

### SUMMARY OF THE INVENTION

However, when the conventional combustion transferring method based on the combustion temperature (e.g., JP-2006-29162-A) is employed for multi-shafts gas turbine in which a gas generator turbine influencing the change of the combustion air flow and a power turbine influencing the change of the fuel flow are independent of each other, it is difficult to measure various state quantities of the high-temperature and high-pressure gas turbine immediately and precisely and thereby estimate the combustion temperature. It is also difficult to control the fuel-air ratio at appropriate values essential for the stable combustion.

In the systematic combustion transferring method based on the fuel flow demand (e.g., JP-2001-263095-A), it is impossible to take into consideration the combustion air flow which changes continuously depending on the operation of the gas generator turbine.

It is therefore the primary object of the present invention to provide a combustor control method and a combustor controller capable of calculating the combustion air flow and the fuel flow in multi-shafts gas turbine with high precision and without the need of performing complicated calculations and thereby calculating the fuel-air ratio necessary for stable combustion control.
(1) In order to achieve the above object, the present invention provides a combustor control method for controlling combustion in combustors equipped with a diffusive combustion unit and a plurality of premixed combustion units. The combustor control method is used for multi-shafts gas turbine made up of: a gas generator turbine on first shaft including a compressor which supplies compressing air, the combustors which is supplied with fuel and the compressed air discharged from the compressor, and high pressure turbine, which is supplied with combustion gas combusted in the combustors, for driving the compressor; and a power turbine on second shaft separated from the first shaft including low pressure turbine which is driven by the combustion gas discharged from the gas generator turbine. The combustor control method comprises the following steps executed using an ignition/extinction control unit of a combustor controller: calculating combustion air flow supplied to the combustors based on an open position of compressor inlet guide vanes attached to the gas generator turbine, revolution speed of the gas generator turbine and atmospheric temperature; calculating fuel flow supplied to the combustors based on revolution speed of the power turbine; and calculating a fuel-air ratio in real time as flame control reference, FCR, based on the calculated combustion air flow and fuel flow.
   With this method, it becomes possible to calculate the combustion air flow and the fuel flow in multi-shafts gas turbine with high precision and without the need of performing complicated calculations and thereby calculate a fuel-air ratio necessary for stable combustion control.
(2) Preferably, in the above combustor control method (1), fuel flow demand, FFD, for the diffusive combustion unit and each of the premixed combustion units are calculated by a ratio of premix combustion is previously set according to flame control reference, FCR, using the functional unit of fuel flow demand, FFD, for each of combustion units of the combustion controller.
(3) Preferably, in the above combustor control method (2), the functional unit of fuel flow demand, FFD, for each of combustion units sets a local minimum value, FCRRLMN, and a local maximum value, FCRRLMX, as limiting values for restricting the flame control reference, FCR, which are changed by command from the ignition/extinction control unit in response to transferring combustion mode.
(4) Preferably, in the above combustor control method (3), the functional unit of fuel flow demand, FFD, for each of combustion units compares the flame control reference, FCR, outputted by the ignition/extinction control unit, the local minimum value, FCRRLMN, and the local maximum value, FCRRLMX, and in addition, the functional unit of fuel flow demand, FFD, for each of combustion units figures out the median of those values as a new flame control reference, FCRRL,.
(5) Preferably, in the above combustor control method (4), when the local minimum value, FCRRLMN, and the local maximum value, FCRRLMX, have been changed upon the transferring combustion mode, the functional unit of fuel flow demand, FFD, for each of combustion units suppress a change rate of the flame control reference, FCR, so as to make the change rate constant and outputs the change rate-limited flame control reference, FRCRL,.
(6) Preferably, in the above combustor control method (2), the functional unit of fuel flow demand, FFD, for each of combustion units outputs the uniform fuel flow demands, FFDs, to each of premixed combustion units in response to the transferring combustion mode commanded by ignition/extinction control unit.
(7) In order to achieve the above object, the present invention provides a combustor controller for controlling combustion in combustors equipped with a diffusive combustion unit and a plurality of premixed combustion units. The combustor controller is used for multi-shafts gas turbine made up of: a gas generator turbine on first shaft including a compressor which supplies compressing air, the combustors which is supplied with fuel and the compressed air discharged from the compressor, and high pressure turbine, which is supplied with combustion gas combusted in the combustors, for driving the compressor; and a power turbine on second shaft separated from the first shaft including low pressure turbine which is driven by the combustion gas discharged from the gas generator turbine. The combustor controller comprises an ignition/extinction control unit which calculates combustion air flow supplied to the combustors based on an open position of compressor inlet guide vanes in the gas generator turbine, revolution speed of the gas generator turbine and compressor inlet temperature, calculates fuel flow supplied to the combustors based on revolution speed of the power turbine, and calculates a fuel-air ratio in real time as flame control reference, FCR, based on the calculated combustion air flow and fuel flow.

With this configuration, it becomes possible to calculate the combustion air flow and the fuel flow in multi-shafts gas turbine with high precision and without the need of performing complicated calculations and thereby calculate a fuel-air ratio necessary for stable combustion control.

As above, the present invention makes it possible to calculate the combustion air flow and the fuel flow in multi-shafts gas turbine with high precision and without the need of performing complicated calculations and thereby calculate a fuel-air ratio necessary for stable combustion control.

### BRIEF DESCRIPTION OF THE DRAWINGS

Fig. 1 is a block diagram showing the configuration of a gas turbine system employing a combustor controller in accordance with an embodiment of the present invention.
Fig. 2 is a block diagram showing the configuration of the combustors employed for the gas turbine system in accordance with the embodiment of the present invention.
Fig. 3 is a block diagram showing the configuration of an ignition/extinction control unit constituting the combustor controller in accordance with the embodiment of the present invention.
Fig. 4 is a block diagram showing the configuration of a combustion unit fuel flow demand unit constituting the combustor controller in accordance with the embodiment of the present invention.
Fig. 5 is a graph for explaining flame control references on ignition operation of premixed combustion units constituting the combustor controller in accordance with the embodiment of the present invention.
Fig. 6 is a graph for explaining the operation of the combustion unit fuel flow unit constituting the combustor controller in accordance with the embodiment of the present invention.
Fig. 7 is a graph for explaining flame control references on extinction operation of premixed combustion units constituting the combustor controller in accordance with the embodiment of the present invention.

### DESCRIPTION OF THE PREFERRED EMBODIMENTS

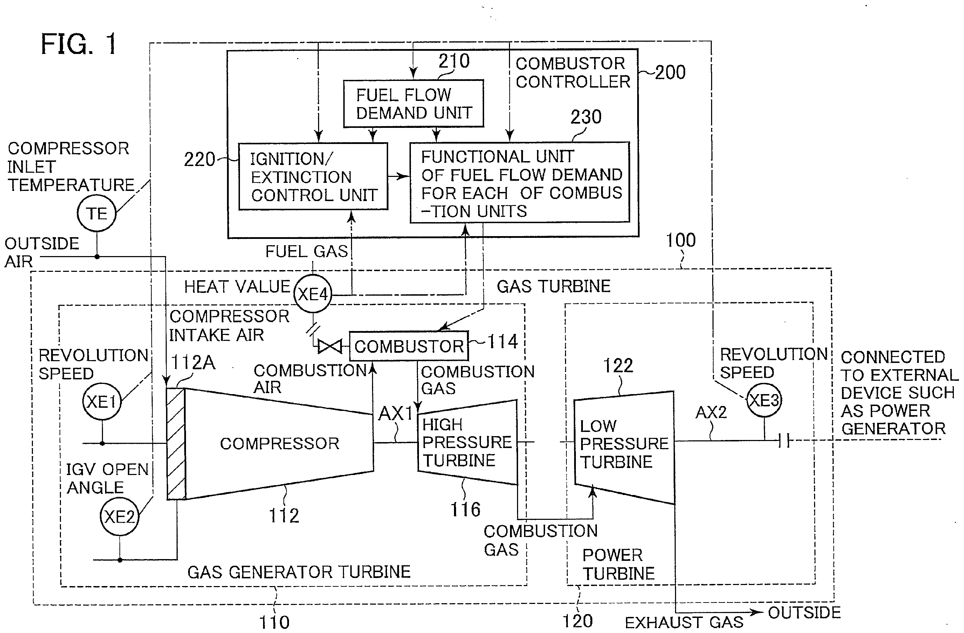

In the following, the configuration and operation of a combustor controller in accordance with an embodiment of the present invention will be described with reference to Figs. 1 - 7.

First, the configuration of a gas turbine system employing the combustor controller in accordance with this embodiment will be explained referring to Fig. 1.

Fig. 1 is a block diagram showing the configuration of the gas turbine system employing the combustor controller in accordance with the embodiment of the present invention.

The gas turbine system comprises a gas turbine 100 and a combustor controller 200.

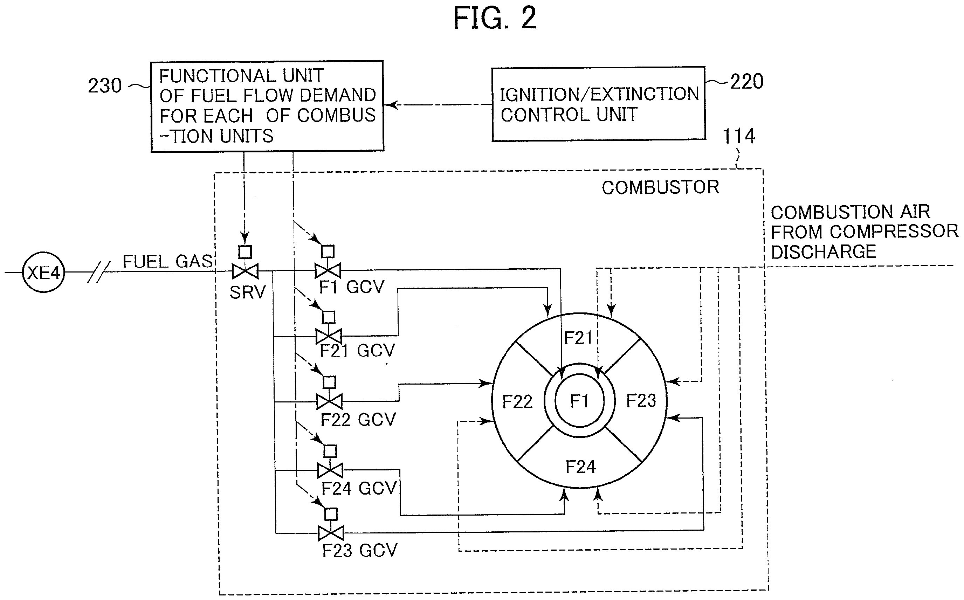

The gas turbine 100 includes a gas generator turbine 110 and a power turbine 120. The gas generator turbine 110, operating perfectly independently of the outside, includes a compressor 112, combustors 114 and high pressure turbine 116. The compressor 112 and the high pressure turbine 116 are connected by a first shaft AX1. The inlet of the compressor 112 is equipped with inlet guide vanes 112A. The combustors 114 are made up of a plurality of combustion units. The details of the combustors 114 will be explained later referring to Fig. 2.

The power turbine 120 has a shaft that is mechanically separated from that of the gas generator turbine 110. The power turbine 120 includes low pressure turbine 122. The low pressure turbine 122 is connected to a second shaft AX2. The second shaft AX2 is separate from the aforementioned first shaft AX1 of the gas generator turbine 110. The second turbine 122 transmits torque to an external device such as a power generator.

Combustion air is introduced from outside to the compressor 112, compressed by the compressor 112 and then supplied to the combustors 114. In the combustors 114, combustion gas is generated (combustion is carried out) using the combustion air and fuel gas supplied from a fuel system. The combustion gas after the combustion is lead to the high pressure turbine 116 of the gas generator turbine 110 for heat recovery. In this case, combustion air flow and power necessary for the compressor 112 are uniquely determined by the gas turbine load, according to the correlation between the revolution speed of the turbine 116 and the open position of the inlet guide vanes 112A.

The revolution speed of the turbine 116 is a speed at which the power necessary for the compressor 112 balances with torque generated by the heat recovery by the turbine 116 of the gas generator turbine 110. The combustion gas after the heat recovery by the gas generator turbine 110 undergoes the next heat recovery by the power turbine 120 and thereby transmits torque to the external device such as the power generator.

Therefore, the fuel flow (i.e., the amount of the flow of the fuel) is changed and controlled in order to increase/decrease the torque generated by the power turbine 120, that is, the gas turbine load.

The gas generator turbine 110 is equipped with a temperature detector TE for detecting the atmospheric temperature at the inlet of the compressor 112, an open position detector XE2 for detecting the open position of the inlet guide vanes 112A, and a revolution speed detector XE1 for detecting the revolution speed of the gas generator turbine 110. Meanwhile, the power turbine 120 is equipped with a revolution speed detector XE3 for detecting the revolution speed of the power turbine 120. Further, a fuel supply system of the combustors 114 is equipped with a heat value detector XE4 for detecting the heat value of the fuel gas supplied to the combustors 114.

The combustor controller 200 includes a fuel flow demand unit 210, an ignition/extinction control unit 220 and functional unit of fuel flow demand for each of combustion units 230. The fuel flow demand unit 210 outputs a fuel flow demand, FFD, according to the revolution speed of the gas generator turbine 110 detected by the revolution speed detector XE1 and the revolution speed of the power turbine 120 detected by the revolution speed detector XE3. For example, in the case where the power generator as the external device is connected to the shaft AX2 of the power turbine 120, the fuel flow demand unit 210 outputs the fuel flow demand, FFD, according to the revolution speeds of the gas generator turbine 110 and the power turbine 120 so that the output of the power generator gradually increases with time from the startup of the turbines 110 and 120 until the turbines reach their rated states.

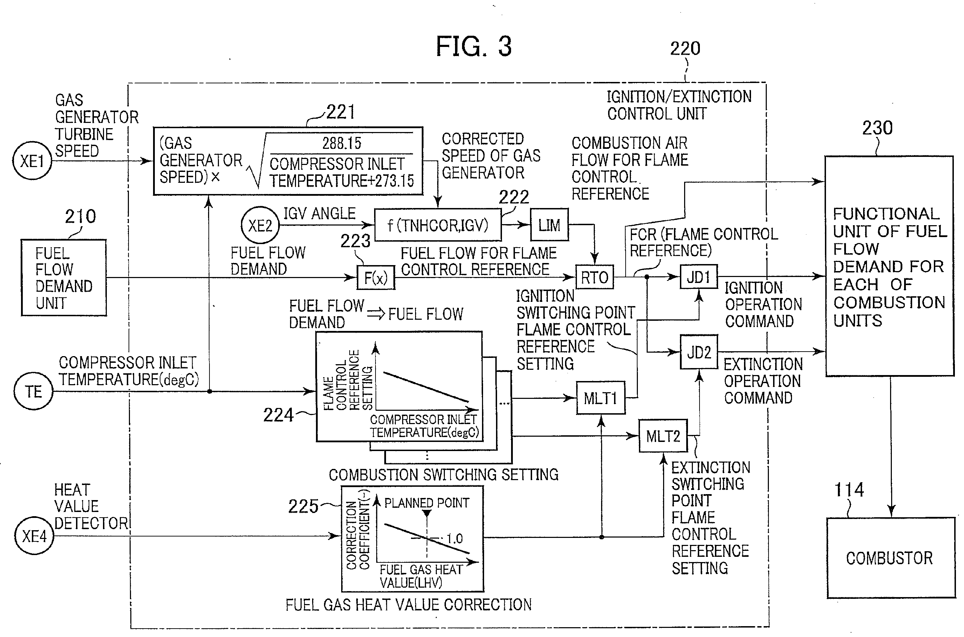

The ignition/extinction control unit 220 outputs an ignition operation command and an extinction operation command (for controlling the ignition and extinction of the combustion units constituting the combustors 114) to the functional unit of fuel flow demand for each of combustion units 230 based on the inlet temperature of the compressor 112 detected by the temperature detector TE, the open position of the inlet guide vanes 112A detected by the open position detector XE2, the revolution speed of the gas generator turbine 110 detected by the revolution speed detector XE1, the heat value of the fuel gas supplied to the combustors 114 detected by the heat value detector XE4 and the fuel flow demand, FFD, outputted by the fuel flow demand unit 210. Further, the ignition/extinction control unit 220 outputs flame control reference, FCR, to the functional unit of fuel flow demand for each of combustion units unit 230 based on the open position of the inlet guide vanes 112A detected by the open position detector XE2, the revolution speed of the gas generator turbine 110 detected by the revolution speed detector XE1 and the fuel flow demand, FFD, outputted by the fuel flow demand unit 210. The details of the ignition/extinction control unit 220 will be explained later referring to Fig. 3.

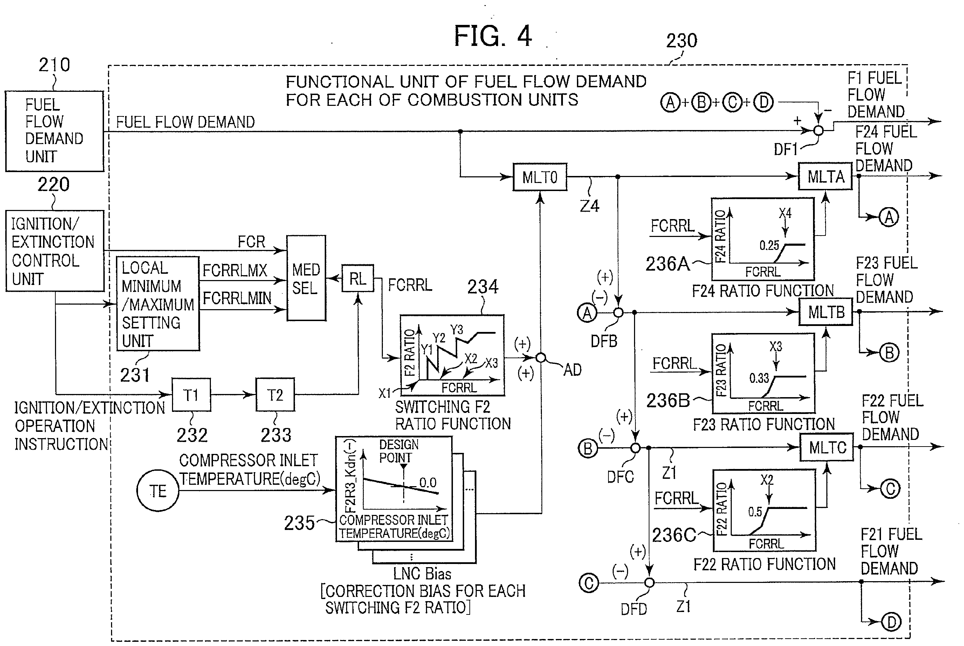

The functional unit of fuel flow demand for each of combustion units 230 calculates fuel flow demand, FFD, (for controlling the flows of the fuel gas supplied to the combustion units of the combustors 114) based on the inlet temperature of the compressor 112 detected by the temperature detector TE, the fuel flow demand, FFD, outputted by the fuel flow demand unit 210 and the flame control reference, FCR, outputted by the ignition/extinction control unit 220. The functional unit of fuel flow demand for each of combustion units 230 outputs the calculated fuel flow demand, FFD, to the combustors 114. The details of the functional unit of fuel flow demand for each of combustion units 230 will be explained later referring to Fig. 4.

Next, the configuration of the combustors employed for the gas turbine system in accordance with this embodiment will be described referring to Fig. 2.

Fig. 2 is a block diagram showing the configuration of the combustors employed for the gas turbine system in accordance with the embodiment of the present invention.

Fig. 2 shows the positional relationship among combustion fields of a dry low-NOx combustors and the configuration of a fuel gas system and a combustion air system for supplying the fuel gas and the combustion air to the combustion fields.

The combustors 114 includes a diffusive combustion unit F1 placed at the center in a combustor and four premixed combustion units F21, F22, F23 and F24 arranged around the diffusive combustion unit F1 at even intervals. The combustors 114 is of the type realizing the NOₓ reduction by changing the number of used combustion units across a wide range of the fuel-air ratio from the startup of the gas turbine until the gas turbine load reaches the rated load. In order to achieve the NOₓ reduction with stability, the diffusive combustion unit F1, having a wide operating range regarding available fuel-air ratios, is set at the central position of the combustor and carries out solo combustion at startup. With the increase in the fuel-air ratio due to the increase of the gas turbine revolution speed and the load, the number of used premixed combustion units is successively increased at each stage at which an appropriate fuel-air ratio permissible for each premixed combustion units F21, F22, F23, F24 can be secured, by which stable NOₓ reduction is realized across a wide range of the gas turbine load. For example, at the startup of the gas turbine, the combustion gas is generated (combustion) using the diffusive combustion units F1 only. As the gas turbine revolution speed and load increases, the premixed combustion units F21 is added and the combustion gas is generated (combustion) using the diffusive combustion units F1 and the premixed combustion units F21. As the gas turbine revolution speed and load increases further, the premixed combustion units F22 is added and the combustion gas is generated (combustion) using the diffusive combustion units F1, the premixed combustion units F21 and the premixed combustion units F22. The number of used premixed combustion units is successively increased in this way. After the gas turbine load has reached sufficiently high load, the combustion gas is generated (combustion) using the diffusive combustion units F1 and all the four premixed combustion units F21, ·· · , F24. Incidentally, while four premixed combustion units F2 are arranged in the combustors 114 in this embodiment, the number of premixed combustion units is not restricted to four.

A main pipe for feeding the fuel gas is equipped with a fuel gas shut-off valve, SRV. The main pipe is connected to auxiliary pipes supplying the fuel gas independently to the diffusive combustion units F1 and the four premixed combustion units F21, F22, F23 and F24, respectively. The auxiliary pipes are equipped with fuel gas flow control valves FlGCV, F21GCV, F22GCV, F23GCV and F24GCV, respectively. The open positions of the fuel gas flow control valves FlGCV, F21GCV, F22GCV, F23GCV and F24GCV are controlled by the functional unit of fuel flow demand for each of combustion units 230.

The flows of the fuel gas supplied to the combustion units (fuel gas flows) are calculated from the fuel flow demand, FFD, used for controlling the open positions of the fuel gas flow control valves FlGCV, F21GCV, ... , F24GCV in consideration of the properties of the flows being proportional to the open positions of the fuel gas flow control valves FlGCV, F21GCV, ... , F24GCV, by controlling the front pressure of the fuel gas flow control valves FlGCV, F21GCV, ... , F24GCV with the fuel gas shut-off valve, SRV, and using the fuel gas flow control valves FlGCV, F21GCV, ·· ·, F24GCV in the critical conditions. By this method, the flow of the fuel gas supplied to each combustion units can be calculated precisely and immediately, corresponding to the change of the actual fuel flow, and without the need of performing complicated calculations.

The ignition and extinction of the diffusive combustion units F1 and the four premixed combustion units F21, F22, F23 and F24 are operated based on an ignition/extinction command issued from the ignition/extinction control unit 220.

In order to realize stable combustion and the NOx reduction, it is essential to properly control the fuel-air ratio in each combustion field. Further, the multi-shaft gas turbines have the characteristic that the combustion air flow and the fuel flow change continuously accompanying the change in the gas turbine load since the gas generator turbine (in which the combustors is installed) and the power turbine (for supplying the torque to outside) are independent of each other in the multi-shaft gas turbines as mentioned above. Therefore, it is difficult to employ the conventional method that controls the fuel-air ratio by estimating the combustion temperature from the gas turbine's state quantities or controls the fuel-air ratio using a function (equation) of the fuel flow only.

Next, the configuration and operation of the ignition/extinction control unit 220, constituting the combustor controller in accordance with this embodiment, will be described referring to Fig. 3.

Fig. 3 is a block diagram showing the configuration of the ignition/extinction control unit constituting the combustor controller in accordance with the embodiment of the present invention.

The ignition/extinction control unit 220 includes a revolution speed correction unit 221, flame control reference, FCR, -oriented combustion air flow calculation unit 222, flame control reference, FCR, -oriented fuel flow calculation unit 223, a combustion transferring setting unit 224, a fuel gas heat value correction unit 225, a limitation unit LIM, a ratio calculation unit RTO, multiplication units MLT1 and MLT2, and judgment units JD1 and JD2.

The revolution speed correction unit 221 corrects the revolution speed of the gas generator turbine 110 detected by the revolution speed detector XE1 using the inlet temperature (°C) of the compressor 112 detected by the temperature detector TE and thereby figures out a corrected revolution speed of the gas generator turbine 110. Specifically, the revolution speed correction unit 221 calculates a temperature-corrected revolution speed as ((revolution speed of the gas generator turbine 110 detected by the revolution speed detector XE1)×√(288.15/(inlet temperature of the compressor 112 detected by the temperature detector TE (°C) + 273.15))).

The flame control reference, FCR, -oriented combustion air flow calculation unit 222 calculates flame control reference, FCR, -oriented combustion air flow (combustion air flow for the flame control reference, FCR) based on the revolution speed of the gas generator turbine 110 corrected by the revolution speed correction unit 221 and the revolution speed of the power turbine 120 detected by the revolution speed detector XE3. The limitation unit LIM compares the flame control reference, FCR, -oriented combustion air flow calculated by the flame control reference, FCR, -oriented combustion air flow calculation unit 222 with preset minimum and maximum values of the flame control reference, FCR, -oriented combustion air flow and thereby limits the flame control reference, FCR, -oriented combustion air flow within the range between the minimum and maximum values.

Meanwhile, the flame control reference, FCR,-oriented fuel flow calculation unit 223 calculates and outputs a fuel flow corresponding to the fuel flow demand, FFD, outputted by the fuel flow demand unit 210. Here, the fuel flow demand, FFD, outputted by the fuel flow demand unit 210 is a demand value determined based on the revolution speed of the gas generator turbine 110 detected by the revolution speed detector XE1 and the revolution speed of the power turbine 120 detected by the revolution speed detector XE3 as mentioned above.

The ratio calculation unit RTO calculates the fuel-air ratio ((fuel flow demand, FFD, value)/(flame control reference, FCR, -oriented combustion air flow)) by use of the flame control reference, FCR, -oriented combustion air flow calculated by the flame control reference, FCR, - oriented combustion air flow calculation unit 222 and the fuel flow demand, FFD, value (i.e., the flame control reference, FCR, -oriented fuel flow) calculated by the flame control reference, FCR, -oriented fuel flow calculation unit 223. The ratio calculation unit RTO outputs the calculated fuel-air ratio as the flame control reference, FCR.

The combustion transferring setting unit 224 outputs a corrected setting value of the flame control reference, FCR, according to the inlet temperature (°C) of the compressor 112 detected by the temperature detector TE. The combustion transferring setting unit 224 is equipped with maps representing properties of the flame control reference, FCR, setting value decreasing with the increase in the compressor inlet temperature. The combustion transferring setting unit 224 outputs the flame control reference, FCR, setting value corrected based on the compressor inlet temperature (°C) detected by the temperature detector TE and the map.

Two types of setting values are necessary as the setting value of the flame control reference, FCR; for ignition transferring and for extinction transferring. Further, the ignition transferring includes the following four cases: 1) judgment on the ignition of the premixed combustion units F21 when the diffusive combustion units F1 is currently in use, 2) judgment on the ignition of the premixed combustion units F22 when the diffusive combustion units F1 and the premixed combustion units F21 are currently in use, 3) judgment on the ignition of the premixed combustion units F23 when the diffusive combustion units F1 and the premixed combustion units F21 and F22 are currently in use, and 4) judgment on the ignition of the premixed combustion units F24 when the diffusive combustion units F1 and the premixed combustion units F21, F22 and F23 are currently in use. The extinction transferring also includes four cases similarly. Therefore, the combustion transferring setting unit 224 has eight maps.

The fuel gas heat value correction unit 225 outputs a correction coefficient which changes depending on the heat value of the fuel gas supplied to the combustors 114 detected by the heat value detector XE4. The correction coefficient equals 1.0 at a prescribed temperature and increases/decreases linearly as the temperature decreases/increases from the prescribed temperature.

The multiplication unit MLT1 multiplies one of the corrected setting values of the flame control reference, FCR, outputted by the combustion transferring setting unit 224 by the correction coefficient determined by the fuel gas heat value correction unit 225 and thereby outputs a setting value of an ignition transferring point flame control reference.

The multiplication unit MLT2 multiplies the other of the corrected setting values of the flame control reference, FCR, outputted by the combustion transferring setting unit 224 by the correction coefficient determined by the fuel gas heat value correction unit 225 and thereby outputs a setting value of an extinction transferring point flame control reference, FCR.

The judgment unit JD1 outputs an ignition operation command to the functional unit of fuel flow demand for each of combustion units 230 (to the combustors 114) when the flame control reference, FCR, outputted by the ratio calculation unit RTO exceeds the setting value of the ignition transferring point flame control reference, FCR, outputted by the multiplication unit MLT1. This causes the combustors 114 to ignite a specified combustion unit.

Meanwhile, the judgment unit JD2 outputs an extinction operation command to the functional unit of fuel flow demand for each of combustion units 230 (to the combustors 114) when the flame control reference, FCR, outputted by the ratio calculation unit RTO falls below the setting value of the extinction transferring point flame control reference, FCR, outputted by the multiplication unit MLT2. This causes the combustors 114 to extinguish a specified combustion unit.

With the above-described configuration of the ignition/extinction control unit 220, the combustion air flow is calculated in consideration of the compressor intake air flow (changing dependently on the revolution speed of the compressor, intake air temperature and the open position of the compressor inlet guide vanes), the air flow used for cooling the turbine, the air flow leaking out of the system, etc. Thus, the combustion air flow can be calculated precisely and immediately, corresponding to the change of the actual combustion air flow, and without the need of performing complicated calculations.

Further, the fuel gas flows are calculated from the fuel flow demand, FFD, used for controlling the open positions of the fuel gas flow control valves (GCVs) in consideration of the properties of the flows being proportional to the open positions of the fuel gas flow control valves, by controlling the front pressure of the fuel gas flow control valves with the fuel gas shut-off valve (SRV) and using the fuel gas flow control valves in the critical conditions. Thus, the fuel flows can be calculated precisely and immediately, corresponding to the change of the actual fuel flows, and without the need of performing complicated calculations.

Thus, the ignition operation command and the extinction operation command regarding the combustion transferring can be outputted by calculating the flame control reference, FCR, (fuel-air ratio) necessary for stable combustion control and comparing the calculated flame control reference, FCR, with FCR settings specified by an ignition point FCR function and an extinction point FCR function for the combustion transferring at the atmospheric temperature.

Further, the ignition point FCR function and the extinction point FCR function can be corrected based on the properties of the fuel used for the combustion. This enables control that further stabilizes the combustion.

Next, the configuration and operation of the functional unit of fuel flow demand for each of combustion units 230, constituting the combustor controller in accordance with this embodiment, will be described referring to Figs. 4 - 7.

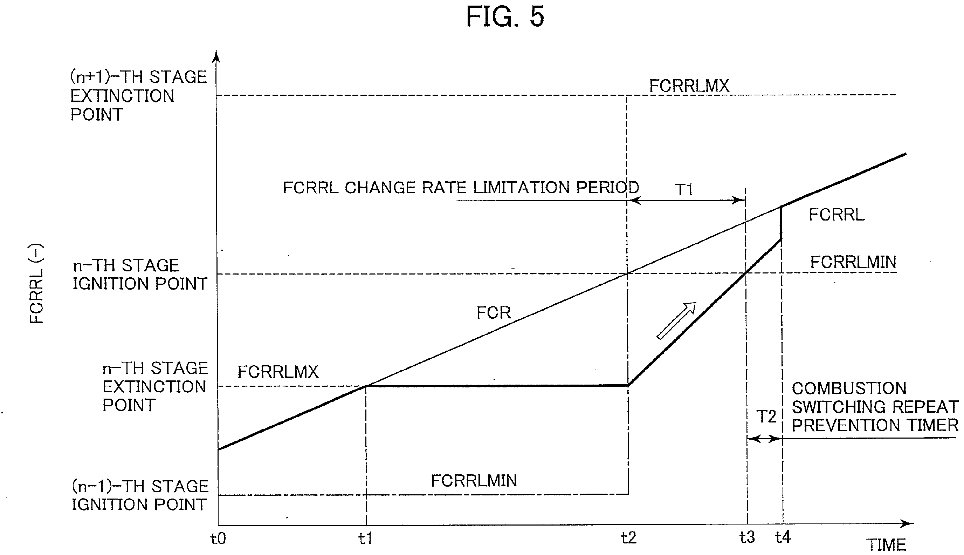

Fig. 4 is a block diagram showing the configuration of the combustion unit fuel flow demand unit constituting the combustor controller in accordance with the embodiment of the present invention. Figs. 5 - 7 are graphs for explaining the operation of the combustion unit fuel flow demand unit constituting the combustor controller in accordance with the embodiment of the present invention.

As shown in Fig. 4, the functional unit of fuel flow demand for each of combustion units 230 includes a local minimum/maximum setting unit 231, a median selector MED_SEL, a rate limiter RL, an FCR change rate limitation unit 232, a combustion transferring repeat prevention timer 233, a transferring F2 ratio generating unit 234, a transferring F2 ratio correction bias generating unit 235, an F24 ratio generating unit 236A, an F23 ratio generating unit 236B, an F22 ratio generating unit 236C, and multiplication units MLT0, NLTA, MLTB and MLTC.

The local minimum/maximum setting unit 231 outputs a local minimum value FCRRLMN and a local maximum value FCRRLMX as limiting values for the flame control reference FCR outputted by the ignition/extinction control unit 220. The median selector MED_SEL compares the flame control reference FCR outputted by the ignition/extinction control unit 220 with the local minimum value, FCRRLMN, and the local maximum value, FCRRLMX, outputted by the local minimum/maximum setting unit 231 and outputs the median of the flame control reference FCR, the local minimum value, FCRRLMN, and the local maximum value, FCRRLMX.

Here, the operation of the median selector MED_SEL will be explained referring to Fig. 5.

In Fig. 5, the horizontal axis represents time and the vertical axis represents a change rate-limited flame control reference FCRRL outputted by the rate limiter RL which will be explained later.

Between time t0 and time t2, the local minimum value FCRRLMN outputted by the local minimum/maximum setting unit 231 remains at a constant level indicated with the chain line. The local minimum value FCRRLMN has been set at the (n-1)-th stage ignition point. Meanwhile, the local maximum value FCRRLMX remains at a constant level indicated with the dotted line. The local maximum value FCRRLMX has been set at the n-th stage extinction point. For example, assuming here that the diffusive combustion units F1 is in use at the time t0 and the premixed combustion units F21 is ignited at the time t2, the (n-1)-th stage ignition point means the ignition point for the diffusive combustion units F1 and the n-th stage extinction point means the extinction point for the premixed combustion units F21.

The flame control reference FCR outputted by the ignition/extinction control unit 220 is assumed to monotonically increase as indicated with the solid line. Since the flame control reference FCR is between the local minimum value FCRRLMN and the local maximum value FCRRLMX at the time t0, the median selector MED_SEL outputs the flame control reference FCR directly as the change rate-limited flame control reference FCRRL as indicated with the thick solid line.

After time t1, as the flame control reference FCR exceeds the local maximum value FCRRLMX, the median selector MED_SEL outputs the value limited by the local maximum value FCRRLMX as the change rate-limited flame control reference FCRRL as indicated with the thick solid line.

The rate limiter RL is used for outputting the change rate-limited flame control reference FCRRL indicated between the time t2 and time t4 in Fig. 5 in response to the flame control reference, FCR, outputted by the median selector MED_SEL. The rate limiter RL limits the change rate of the flame control reference so as to make it constant. The FCRRL change rate limitation unit 232 limits the operation of the rate limiter RL between the time t2 and time t3 in Fig. 5 within a time period T1. The combustion transferring repeat prevention timer 233 delays the operating period T1 of the rate limiter RL between the time t3 and the time t4 in Fig. 5 by a time period T2.

When the premixed combustion units F21 starts ignition at the time t2 in Fig. 5, the local minimum value FCRRLMN outputted by the local minimum/maximum setting unit 231 is changed stepwise from the previous (n-1)-th stage ignition point to the n-th stage ignition point as indicated with the chain line. Meanwhile, the local maximum value FCRRLMX is changed stepwise from the previous n-th stage extinction point to the (n+1)-th stage extinction point as indicated with the dotted line.

Assuming here that the rate limiter RL does not exist, the change rate-limited flame control reference FCRRL changes stepwise at the time t2 from the local maximum value FCRRLMX used before the time t2 (n-th stage extinction point) to the value of the flame control reference FCR indicated with the solid line, which is undesirable.

In contrast, the rate limiter RL limits the increase of the change rate-limited flame control reference FCRRL during the period T1 from the time t2 (due to the operation of the FCRRL change rate limitation unit 232) so that the change rate-limited flame control reference FCRRL increases not stepwise but at a constant change rate from the local maximum value FCRRLMX used before the time t2 (n-th stage extinction point). Also after the expiration of the period T1 at the time t3, the rate limiter RL limits the increase of the change rate-limited flame control reference FCRRL during the period T2 from the time t3 (due to the operation of the combustion transferring repeat prevention timer 233) so that the change rate-limited flame control reference FCRRL increases at a constant change rate. This limitation is carried out for preventing a repeat of the combustion transferring, such as ignition of the premixed combustion unit F21 followed by its extinction and further ignition caused by external disturbance, etc.

After the time t4, the flame control reference FCR is directly outputted as the change rate-limited flame control reference FCRRL by the original operation of the median selector MED_SEL when the flame control reference FCR is between the local minimum value FCRRLMN and the local maximum value FCRRLMX.

By the above operation, after the flame control reference FCR has reached the n-th stage ignition point, the flame control reference (FCRRL) is increased, with the limitation on the change rate, from the n-th extinction point to the n-th ignition point at a constant rate, by which the ignition can be conducted smoothly through the transferring band, without retardation of the ignition operation due to external disturbance.

Subsequently, the transferring F2 ratio generating unit 234 changes an F2 ratio according to the change rate-limited flame control reference FCRRL. Here, the F2 ratio is a value calculated as (the sum of the fuel flow demand, FFD, values for the four premixed combustion units F21, F22, F23 and F24)/((the fuel flow demand, FFD, value for the diffusive combustion units F1) + (the sum of the fuel flow demand, FFD, values for the four premixed combustion units F21, F22, F23 and F24)).

As shown in Fig. 4, for example, when the change rate-limited flame control reference FCRRL is less than X1, the transferring F2 ratio generating unit 234 sets the F2 ratio at 0. When the change rate-limited flame control reference FCRRL reaches X1, the transferring F2 ratio generating unit 234 sets the F2 ratio at Y1 (e.g., 0.5). As the change rate-limited flame control reference FCRRL increases from X1, the F2 ratio is decreased from Y1. When the change rate-limited flame control reference FCRRL reaches X2, the transferring F2 ratio generating unit 234 sets the F2 ratio at Y2 (e.g., 0.6). As the change rate-limited flame control reference FCRRL increases from X2, the F2 ratio is decreased from Y2. When the change rate-limited flame control reference FCRRL reaches X3, the transferring F2 ratio generating unit 234 sets the F2 ratio at Y3 (e.g., 0.7). As the change rate-limited flame control reference FCRRL increases from X3, the F2 ratio is decreased from Y3.

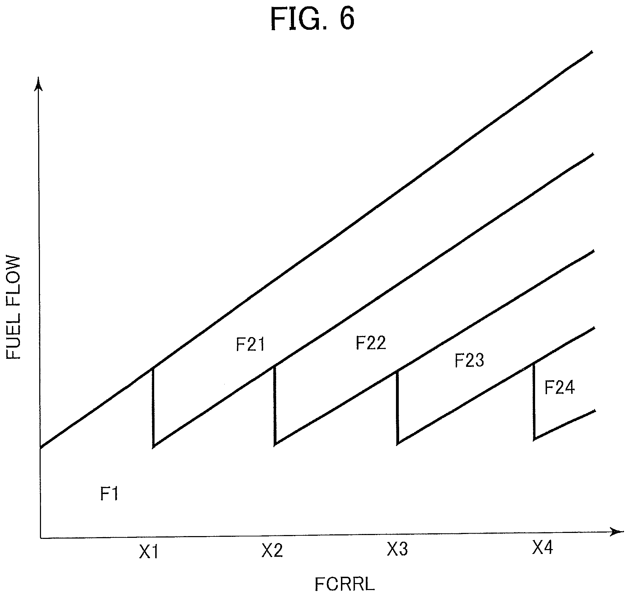

Here, an operation carried out by the transferring F2 ratio generating unit 234 will be explained referring to Fig. 6.

In Fig. 6, the horizontal axis represents the change rate-limited flame control reference FCRRL and the vertical axis represents the flow of the fuel gas supplied to the whole combustors.

When the change rate-limited flame control reference FCRRL is less than X1, the F2 ratio equals 0, and thus the fuel gas is supplied to the diffusive combustion units F1 only. The flow of the supplied fuel gas increases with the increase in the change rate-limited flame control reference FCRRL. When the change rate-limited flame control reference FCRRL reaches X1, the F2 ratio is set at Y1 (e.g., 0.5), and thus the fuel gas is supplied also to the premixed combustion unit F21. As mentioned above, the fuel gas flow supplied to the premixed combustion units F21 is controlled by controlling the front pressure of the fuel gas flow control valve F1GCV with the fuel gas shut-off valve SRV and using the fuel gas flow control valve F1GCV in the vicinity of the critical condition. This allows the fuel gas flow through the fuel gas flow control valve F1GCV to be proportional to the open position of the fuel gas flow control valve F1GCV. Thus, the fuel gas flow can be calculated precisely based on the open position control of the fuel gas flow control valve F1GCV.

As the change rate-limited flame control reference FCRRL increases from X1, the fuel gas flow supplied to the diffusive combustion unit F1 is increased while keeping the fuel gas flow supplied to the premixed combustion units F21 substantially at a constant level (i.e., the F2 ratio decreases from Y1). When the change rate-limited flame control reference FCRRL reaches X2, the F2 ratio is set at Y2 (e.g., 0.6), and thus the fuel gas is supplied also to the premixed combustion units F22. Equal amounts of fuel gas are supplied to the premixed combustion units F21 and F22. This control (operation of the F24 ratio generating unit 236A, the F23 ratio generating unit 236B and the F22 ratio generating unit 236C) will be explained later.

The transferring F2 ratio correction bias generating unit 235 shown in Fig. 4 generates a correction bias according to the inlet temperature of the compressor 112 detected by the temperature detector TE. The correction bias equals 0.0 when the inlet temperature of the compressor 112 is at a prescribed temperature and increases/decreases from 0.0 according to the extent of the decrease/increase of the compressor inlet temperature from the prescribed temperature. An adder AD adds the correction bias outputted by the transferring F2 ratio correction bias generating unit 235 to the F2 ratio outputted by the transferring F2 ratio generating unit 234 and thereby outputs a corrected F2 ratio.

Incidentally, the transferring F2 ratio correction bias generating unit 235 is equipped with a certain number of maps corresponding to the number of turning points of the graph (function) representing the relationship between the change rate-limited flame control reference FCRRL and the F2 ratio. For example, in the graph of the transferring F2 ratio generating unit 234 shown in Fig. 4, the F2 ratio changes from 0 to Y1 when the change rate-limited flame control reference FCRRL reaches X1. This is the first turning point. Further, the graph of the F2 ratio changes its direction to decrease from Y1 when the change rate-limited flame control reference FCRRL increases from X1. This is the second turning point. The transferring F2 ratio correction bias generating unit 235 has a certain number of maps corresponding to the number of such turning points.

The multiplication unit MLT0 multiplies the fuel flow demand outputted by the fuel flow demand unit 210 by the corrected F2 ratio outputted by the adder AD and thereby outputs the F2 ratio-multiplied fuel flow demand.

The F24 ratio generating unit 236A determines the ratio of the fuel gas flow to be supplied to the premixed combustion unit F24 within the F2 ratio based on the change rate-limited flame control reference FCRRL outputted by the rate limiter RL and outputs the determined ratio. For example, when the change rate-limited flame control reference FCRRL reaches X4, the F24 ratio generating unit 236A outputs 0.25 as shown in Fig. 4. The multiplication unit MLTA multiplies the output Z4 of the multiplication unit MLT0 by the F24 ratio outputted by the F24 ratio generating unit 236A and thereby outputs an F24 fuel flow demand. The F24 fuel flow demand is outputted to the fuel gas flow control valve F24GCV shown in Fig. 2.

The F23 ratio generating unit 236B determines the ratio of the fuel gas flow to be supplied to the premixed combustion unit F23 within the F2 ratio based on the change rate-limited flame control reference FCRRL outputted by the rate limiter RL and outputs the determined ratio. For example, when the change rate-limited flame control reference FCRRL reaches X3, the F23 ratio generating unit 236B outputs 0.33 as shown in Fig. 4. A subtractor DFB subtracts the F24 fuel flow demand outputted by the multiplication unit MLTA ((A) in Fig. 4) from the output Z4 of the multiplication unit MLT0. The multiplication unit MLTB multiplies the output D3 of the subtractor DFB by the F23 ratio outputted by the F23 ratio generating unit 236B and thereby outputs an F23 fuel flow demand. The F23 fuel control demand is outputted to the fuel gas flow control valve F23GCV shown in Fig. 2.

The F22 ratio generating unit 236C determines the ratio of the fuel gas flow to be supplied to the premixed combustion unit F22 within the F2 ratio based on the change rate-limited flame control reference FCRRL outputted by the rate limiter RL and outputs the determined ratio. For example, when the change rate-limited flame control reference FCRRL reaches X2, the F22 ratio generating unit 236C outputs 0.5 as shown in Fig. 4. A subtractor DFC subtracts the F23 fuel demand outputted by the multiplication unit MLTB ((B) in Fig. 4) from the output Z3 of the subtractor DFB. The multiplication unit MLTC multiplies the output D2 of the subtractor DFC by the F22 ratio outputted by the F22 ratio generating unit 236C and thereby outputs an F22 fuel flow demand. The F22 fuel flow demand is outputted to the fuel gas flow control valve F22GCV shown in Fig. 2.

A subtractor DFD subtracts the F22 fuel flow demand outputted by the multiplication unit MLTC ((C) in Fig. 4) from the output Z2 of the subtractor DFC and thereby outputs an F21 fuel flow demand (Z1). The F21 fuel flow demand is outputted to the fuel gas flow control valve F21GCV shown in Fig. 2.

Here, the fuel distribution according to the F2 ratio in the above-described configuration will be explained concretely by taking an example.

When the change rate-limited flame control reference FCRRL is less than X1, the F2 ratio outputted by the transferring F2 ratio generating unit 234 equals 0, and thus the output Z4 of the multiplication unit MLT0 equals 0. It should be noted here that the correction bias outputted by the transferring F2 ratio correction bias generating unit 235 is assumed to be 0 in this explanation. Therefore, the fuel flow demand for the premixed combustion units F21, F22, F23 and F24 are all 0. The whole of the fuel flow demand outputted by the fuel flow demand unit 210 is inputted to the subtractor DF1. The subtractor DF1 subtracts the sum of the F21 fuel flow demand ((D) in Fig. 4), the F22 fuel flow demand ((C) in Fig. 4), the F23 fuel flow demand ((B) in Fig. 4) and the F24 fuel flow demand ((A) in Fig. 4) from the fuel flow demand outputted by the fuel flow demand unit 210. Since A + B + C + D = 0 in this case, the fuel flow demand outputted by the fuel flow demand unit 210 is directly inputted to the diffusive combustion unit F1 as the F1 fuel flow demand. As shown in Fig. 6, when the change rate-limited flame control reference FCRRL is less than X1, only the diffusive combustion unit F1 is used and the flow of the fuel gas supplied to the diffusive combustion unit F1 increases with the increase in the value of the fuel flow demand.

When the change rate-limited flame control reference FCRRL reaches X1, the F2 ratio outputted by the transferring F2 ratio generating unit 234 increases to Y1 (e.g., 0.5), and thus the output Z4 of the multiplication unit MLT0 increases to (Y1 · fuel flow demand), that is, (0.5 · fuel flow demand), for example. Since the F24 ratio generating unit 236A outputs an F24 ratio of 0.25 when the change rate-limited flame control reference FCRRL reaches X4, the F24 ratio outputted by the F24 ratio generating unit 236A when the change rate-limited flame control reference FCRRL is X1 equals 0. Therefore, the F24 fuel flow demand equals 0. The output Z3 of the subtractor DFB, which equals the output Z4 of the multiplication unit MLT0 in this case, equals (Y1 · fuel flow demand), that is, (0.5 · fuel flow demand), for example. Since the F23 ratio generating unit 236B outputs an F23 ratio of 0.33 when the change rate-limited flame control reference FCRRL reaches X3, the F23 ratio outputted by the F23 ratio generating unit 236B when the change rate-limited flame control reference FCRRL is X1 equals 0. Therefore, the F23 fuel flow demand equals 0. The output Z2 of the subtractor DFC equals the aforementioned output Z4 of the multiplication unit MLT0 in this case. Since the F22 ratio generating unit 236C outputs an F22 ratio of 0.5 when the change rate-limited flame control reference FCRRL reaches X2, the F22 ratio outputted by the F22 ratio generating unit 236C when the change rate-limited flame control reference FCRRL is X1 equals 0. Therefore, the F22 fuel flow demand equals 0. The F21 fuel flow demand (as the output Z1 of the subtractor DFD), which equals the aforementioned output Z4 of the multiplication unit MLT0 in this case, equals (Y1 · fuel flow demand), that is, (0.5 · fuel flow demand), for example.

Meanwhile, the subtractor DF1 subtracts the sum of the F21 fuel flow demand ((D) in Fig. 4), the F22 fuel flow demand ((C) in Fig. 4), the F23 fuel flow demand ((B) in Fig. 4) and the F24 fuel flow demand ((A) in Fig. 4) from the fuel flow demand outputted by the fuel flow demand unit 210. Since D = 0.5 at this point, A + B + C + D equals 0.5, and thus the F1 fuel flow demand for the diffusive combustion unit F1 equals (0.5 · fuel flow demand).

Thus, the fuel flow demand outputted by the fuel flow demand unit 210 is divided into halves and supplied to the diffusive combustion unit F1 and the premixed combustion unit F21, respectively.

When the change rate-limited flame reference FCRRL reaches X2, the F2 ratio outputted by the transferring F2 ratio generating unit 234 increases to Y2 (e.g., 0.6), and thus the output X4 of the multiplication unit MLT0 increases to (Y2 · fuel flow demand), that is, (0.6 · fuel flow demand), for example. Since the F24 ratio generating unit 236A outputs an F24 ratio of 0.25 when the change rate-limited flame reference FCRRL reaches X4, the F24 ratio outputted by the F24 ratio generating unit 236A when the change rate-limited flame reference FCRRL is X2 equals 0. Therefore, the F24 fuel flow demand equals 0. The output Z3 of the subtractor DFB, which equals the output Z4 of the multiplication unit MLT0 in this case, equals (Y2 · fuel flow demand), that is, (0.6 · fuel flow demand), for example. Since the F23 ratio generating unit 236B outputs an F23 ratio of 0.33 when the change rate-limited flame reference FCRRL reaches X3, the F23 ratio outputted by the F23 ratio generating unit 236B when the change rate-limited flame reference FCRRL is X2 equals 0. Therefore, the F23 fuel flow demand equals 0. The output Z2 of the subtractor DFC equals the aforementioned output Z4 of the multiplication unit MLT0 (e.g., (0.6 · fuel flow demand)) in this case. Since the F22 ratio generating unit 236C outputs an F22 ratio of 0.5 when the change rate-limited flame reference FCRRL is X2, the F22 fuel flow demand equals (0.3 · fuel flow demand). The F21 fuel flow demand, as the output Z1 of the subtractor DFD, equals (0.3 · fuel flow demand). Thus, 60% (0.6) of the fuel flow demand outputted by the fuel flow demand unit 210 is divided into halves and supplied to the premixed combustion units F21 and F22, respectively.

Meanwhile, the subtractor DF1 subtracts the sum of the F21 fuel flow demand ((D) in Fig. 4), the F22 fuel flow demand ((C) in Fig. 4), the F23 fuel flow demand ((B) in Fig. 4) and the F24 fuel flow demand ((A) in Fig. 4) from the fuel flow demand outputted by the fuel flow demand unit 210. Since C = 0.3 and D = 0.3 at this point, A + B + C + D equals 0.6, and thus the F1 fuel flow demand for the diffusive combustion unit F1 equals (0.4 · fuel flow demand).

Thus, the fuel flow demand outputted by the fuel flow demand unit 210 is distributed and supplied to the diffusive combustion unit F1, the premixed combustion unit F21 and the premixed combustion unit F22 in a ratio of 0.4 : 0.3 : 0.3, respectively.

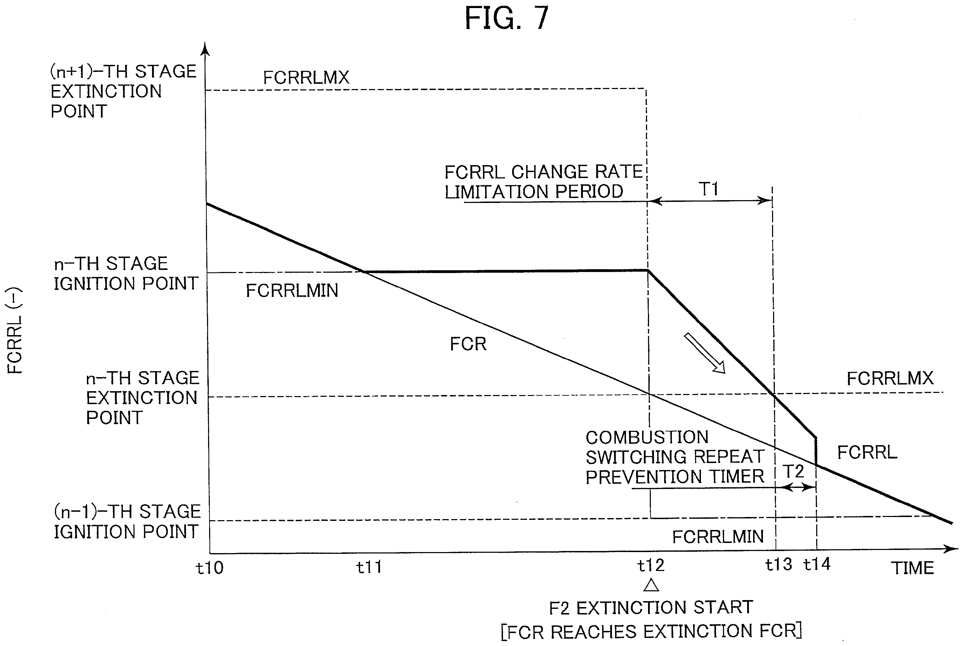

Next, the extinction operation implemented by the median selector MED_SEL will be explained referring to Fig. 7.

In Fig. 7, the horizontal axis represents time and the vertical axis represents a change rate-limited flame reference FCRRL outputted by the rate limiter RL which will be explained later.

Between time t10 and time t12, the local maximum value FCRRLMX outputted by the local minimum/maximum setting unit 231 remains at a constant level indicated with the dotted line. The local maximum value FCRRLMX has been set at the (n+1)-th stage extinction point. Meanwhile, the local minimum value FCRRLMN remains at a constant level indicated with the chain line. The local minimum value FCRRLMN has been set at the n-th stage ignition point. For example, assuming here that the diffusive combustion units F1 and the premixed combustion units F21 are in use at the time t10 and the premixed combustion units F21 is extinguished at the time t12, the (n+1)-th stage extinction point means the extinction point for the premixed combustion units F22 and the n-th stage ignition point means the ignition point for the premixed combustion units F21.

The flame reference FCR outputted by the ignition/extinction control unit 220 is assumed to monotonously decrease as indicated with the solid line. Since the flame reference FCR is between the local minimum value FCRRLMN and the local maximum value FCRRLMX at the time t10, the median selector MED_SEL outputs the flame reference FCR directly as the change rate-limited flame reference FCRRL as indicated with the thick solid line.

After time t11, as the flame reference FCR falls below the local minimum value FCRRLMN, the median selector MED_SEL outputs the value limited by the local minimum value FCRRLMN as the change rate-limited flame reference FCRRL as indicated with the thick solid line.

The rate limiter RL is used for outputting the change rate-limited flame reference FCRRL indicated between the time t12 and time t14 in Fig. 7 in response to the flame reference outputted by the median selector MED_SEL. The rate limiter RL limits the change rate of the flame reference so as to make it constant. The FCR change rate limitation unit 232 limits the operation of the rate limiter RL between the time t12 and time t13 in Fig. 7 within a time period T1. The combustion transferring repeat prevention timer 233 delays the operating period T1 of the rate limiter RL between the time t13 and the time t14 in Fig. 7 by a time period T2.

When the premixed combustion units F21 starts extinction at the time t12 in Fig. 7, the local maximum value FCRRLMX outputted by the local minimum/maximum setting unit 231 is changed stepwise from the previous (n+1)-th stage extinction point to the n-th stage extinction point as indicated with the dotted line. Meanwhile, the local minimum value FCRRLMN is changed stepwise from the previous n-th stage ignition point to the (n-1)-th stage ignition point as indicated with the chain line.

The rate limiter RL limits the decrease of the change rate-limited flame reference FCRRL during the period T1 from the time t12 (due to the operation of the FCR change rate limitation unit 232) so that the change rate-limited flame reference FCRRL decreases not stepwise but at a constant change rate from the local minimum value FCRRLMN used before the time t12 (n-th stage ignition point). Also after the expiration of the period T1 at the time t13, the rate limiter RL limits the decrease of the change rate-limited flame reference FCRRL during the period T2 from the time t13 (due to the operation of the combustion transferring repeat prevention timer 233) so that the change rate-limited flame reference FCRRL decreases at a constant change rate.

After the time t14, the flame reference FCR is directly outputted as the change rate-limited flame reference FCRRL by the original operation of the median selector MED_SEL when the flame reference FCR is between the local minimum value FCRRLMN and the local maximum value FCRRLMX.

With the configuration of the functional unit of fuel flow demand for each of combustion units 230 described above, the FCRRL is selected by limiting the flame reference FCR (calculated based on the fuel-air ratio essential for stable combustion and NOx reduction) by the FCRRLMN and FCRRLMX specified by the local minimum value and local maximum value of the FCR range employed for executing the combustion transferring operation (e.g. ignition point FCR, extinction point FCR), and the distribution ratio regarding the fuel flow demand distributed to each of the combustion units is functionized (represented as a function) by the FCRRL. This makes it possible to properly control the number of used combustion fields and the use of each combustion field accompanying the increase/decrease of the FCRRL. Thus, even when transient fluctuations of an electric power system, a mechanically-driven device, etc. connected with the power turbine occurred, stable combustion and NOx reduction in combustion units already in the combusting state can be realized. Further, even when a combustion transferring band is temporarily crossed due to such transient fluctuations, the probability of the combustion transferring is reduced and the repeat of the combustion transferring is prevented, by which stable operation of the whole gas turbine is made possible.

Furthermore, the change rate of the FCRRL when each combustion transferring is carried out is prescribed, and the continuity of the FCRRL till the completion of the combustion transferring is maintained once the combustion transferring operation is started, by which stability of the whole gas turbine during the combustion transferring is also realized.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A combustor control method for controlling combustion in a combustor (114) equipped with a diffusive combustion unit (F1) and a plurality of premixed combustion units (F21 - F24), the combustor control method being used for multi-shafts gas turbine made up of:
a gas generator turbine (110) on a first shaft (AX1) including a compressor (112) which supplies compressing air, the combustor (114) which is supplied with fuel and the compressed air discharged from the compressors (112), and high pressure turbine (116), which is supplied with combustion gas combusted in the combustor (114), for driving the compressor (112); and
a power turbine (120) including a low pressure turbine (122) on a second shaft (AX2) separated from the first shaft (AX1) is driven by the combustion gas discharged from the gas generator turbine (110),
**characterized in that** the combustor control method comprises the following steps executed using an ignition/extinction control unit (220) of a combustor controller (200):
calculating combustion air flow supplied to the combustor (114) based on an open position of compressor inlet guide vanes (112A) attached to the gas generator turbine (110), revolution speed of the gas generator turbine (110) and atmospheric temperature;
calculating a flow of the fuel supplied to the combustor (114) based on revolution speed of the power turbine (120) ; and
calculating a fuel-air ratio in real time as flame reference based on the calculated combustion air flow and fuel flow.

2. The combustor control method according to claim 1, wherein fuel flow demand for the diffusive combustion unit (F1) and each of the premixed combustion units (F21 - F24) are calculated by a ratio of premix combustion is previously set according to flame control reference, FCR, using the functional unit of fuel flow demand, FFD, for each of combustion units (230) of the combustion controller (200).

3. The combustor control method according to claim 2, wherein the functional unit of fuel flow demand for each of combustion units (230) sets a local minimum value, FCRRLMN, and a local maximum value, FCRRLMX, as limiting values for restricting the flame reference, FCR, outputted by the ignition/extinction control unit while changing the local minimum value, FCRRLMN, and the local maximum value, FCRRLMX, in response to transferring combustion mode.

4. The combustor control method according to claim 3, wherein the functional unit of fuel flow demand for each of combustion units (230) compares the flame reference, FCR, outputted by the ignition/extinction control unit, the local minimum value, FCRRLMN, and the local maximum value, FCRRLMX, and figures out the median of the those values as a new flame reference, FCRRL,.

5. The combustor control method according to claim 4, wherein when the local minimum value, FCRRLMN, and the local maximum value, FCRRLMX, have been changed upon the transferring combustion mode, the functional unit of fuel flow demand for each of combustion units (230) suppress a change rate of the flame reference so as to make the change rate constant and outputs the change rate-limited flame reference, FCRRL,.

6. The combustor control method according to claim 2, wherein the functional unit of fuel flow demand for each of combustion units (230) outputs the uniform fuel flow demand to each of premixed combustion units (F21 - F24) in response to the transferring of the combustion mode commanded by ignition/extinction control unit.

7. A combustor controller for controlling combustion in combustor (114) equipped with a diffusive combustion unit (F1) and a plurality of premixed combustion units (F21 - F24), the combustor controller being used for multi-shafts gas turbine made up of:
a gas generator turbine (110) on a first shaft (AX1) including a compressor (112) which supplies compressing air, the combustor (114) which is supplied with fuel and the compressed air discharged from the compressor (112), and high pressure turbine (116), which is supplied with combustion gas combusted in the combustor (114), for driving the compressor (112); and
a power turbine (120) on a second shaft (AX2) separated from the first shaft (AX1) including low pressure turbine (122) which is driven by the combustion gas discharged from the gas generator turbine (110),
**characterized in that** the combustor controller (200) comprises an ignition/extinction control unit (220) which calculates combustion air flow supplied to the combustor (114) based on an open position of compressor inlet guide vanes (112A) attached to the gas generator turbine (110), revolution speed of the gas generator turbine (110) and compressor inlet temperature, calculates the fuel flow supplied to the combustor (114) based on revolution speed of the power turbine (120), and calculates a fuel-air ratio in real time as flame reference based on the calculated combustion air flow and fuel flow.

## Patentansprüche

1. Brennkammersteuerverfahren zum Steuern der Verbrennung in einer Brennkammer (114), die mit einer Diffusionsverbrennungseinheit (F1) und mehreren vorgemischten Verbrennungseinheiten (F21-F24) ausgestattet ist, wobei das Brennkammersteuerverfahren für eine Mehrwellengasturbine verwendet wird, die aufgebaut ist aus:
einer Gasgeneratorturbine (110) auf einer ersten Welle (AX1), die einen Kompressor (112), der Druckluft liefert, die Brennkammer (114), die mit Brennstoff und der Druckluft, die aus dem Kompressor (112) ausgestoßen wird, versorgt wird, und eine Hochdruckturbine (116) enthält, die mit Verbrennungsgas, das in der Brennkammer (114) verbrannt wird, versorgt wird, um den Kompressor (112) anzutreiben; und
einer Leistungsturbine (120), die eine Niederdruckturbine (122) auf einer zweiten Welle (AX2), die von der ersten Welle (AX1) getrennt ist, enthält, die von dem Verbrennungsgas, das aus der Gasgeneratorturbine (110) ausgestoßen wird, angetrieben wird,
**dadurch gekennzeichnet, dass** das Brennkammersteuerverfahren die folgenden Schritte umfasst, die unter Verwendung einer Zünd- bzw. Löschsteuereinheit (220) einer Brennkammersteuereinrichtung (200) ausgeführt werden:
Berechnen eines Verbrennungsluftstroms, der der Brennkammer (114) zugeführt wird, basierend auf einer offenen Position der Kompressoreinlassleitschaufeln (112A), die an der Gasgeneratorturbine (110) befestigt sind, der Drehzahl der Gasgeneratorturbine (110) und der Atmosphärentemperatur;
Berechnen eines Stroms des Brennstoffs, der der Brennkammer (114) zugeführt wird, basierend auf der Drehzahl der Leistungsturbine (120); und
Berechnen eines Brennstoff-Luft-Verhältnisses in Echtzeit, als Flammenreferenz basierend auf dem berechneten Verbrennungsluftstrom und Brennstoffstrom.

2. Brennkammersteuerverfahren nach Anspruch 1, wobei der Brennstoffstrombedarf für die Diffusionsverbrennungseinheit (F1) und jede der vorgemischten Verbrennungseinheiten (F21-F24) durch ein Verhältnis der Vormischverbrennung, das vorher entsprechend der Flammensteuerungsreferenz (FCR) unter Verwendung der Funktionseinheit des Brennstoffbedarfs (FFD) für jede der Verbrennungseinheiten (230) der Verbrennungssteuereinrichtung (200) eingestellt worden ist, berechnet wird.

3. Brennkammersteuerverfahren nach Anspruch 2, wobei die Funktionseinheit des Brennstoffstrombedarfs für jede der Verbrennungseinheiten (230) einen lokalen Minimalwert (FCRRLMN) und einen lokalen Maximalwert (FCRRLMX) als Grenzwerte einstellt, um die Flammenreferenz (FCR), die von der Zünd- bzw. Löschsteuereinheit ausgegeben wird, während des Änderns des lokalen Minimalwerts (FCRRLMN) und das lokalen Maximalwerts (FCRRLMX) einzuschränken, als Reaktion auf das Übertragen des Verbrennungsmodus.

4. Brennkammersteuerverfahren nach Anspruch 3, wobei die Funktionseinheit des Brennstoffstrombedarfs für jede der Verbrennungseinheiten (230) die Flammenreferenz (FCR), die von der Zünd- bzw. Löschsteuereinheit ausgegeben wird, den lokalen Minimalwert (FCRRLMN) und den lokalen Maximalwert (FCRRLMX) vergleicht, und den Mittelwert dieser Werte als eine neue Flammenreferenz (FCRRL) ausrechnet.

5. Brennkammersteuerverfahren nach Anspruch 4, wobei die Funktionseinheit des Brennstoffstrombedarfs dann, wenn der lokale Minimalwert (FCRRLMN) und der lokale Maximalwert (FCRRLMX) beim Übertragen des Verbrennungsmodus verändert worden sind, für jede der Verbrennungseinheiten (230) eine Änderungsrate der Flammenreferenz unterdrückt, um die Änderungsrate konstant zu machen, und die durch die Änderungsrate begrenzte Flammenreferenz (FCRRL) ausgibt.

6. Brennkammersteuerverfahren nach Anspruch 2, wobei die Funktionseinheit des Brennstoffstrombedarfs für jede der Verbrennungseinheiten (230) den einheitlichen Brennstoffstrombedarf an jede der vorgemischten Verbrennungseinheiten (F21-F24) ausgibt, als Reaktion auf das Übertragen des Verbrennungsmodus, das von der Zünd- bzw. Löschsteuereinheit befohlen wird.

7. Verbrennungssteuereinrichtung zum Steuern der Verbrennung in einer Brennkammer (114), die mit einer Diffusionsverbrennungseinheit (F1) und mehreren vorgemischten Verbrennungseinheiten (F21-F24) ausgestattet ist, wobei die Verbrennungssteuereinrichtung für eine Mehrwellengasturbine verwendet wird, die aus Folgendem zusammengesetzt ist:
einer Gasgeneratorturbine (110) auf einer ersten Welle (AX1), die einen Kompressor (112), der Druckluft liefert, die Brennkammer (114), die mit Brennstoff und der Druckluft, die aus dem Kompressor (112) ausgestoßen wird, versorgt wird und eine Hochdruckturbine (116) enthält, die mit Verbrennungsgas, das in der Brennkammer (114) verbrannt wird, versorgt wird, um den Kompressor (112) anzutreiben; und
einer Leistungsturbine (120) auf einer zweiten Welle (AX2), die von der ersten Welle (AX1) getrennt ist, die eine Niederdruckturbine (122) enthält, die von dem Verbrennungsgas, das aus der Gasgeneratorturbine (110) ausgestoßen wird, angetrieben wird
**dadurch gekennzeichnet, dass** die Brennkammersteuereinrichtung (200) eine Zünd- bzw. Löschsteuereinheit (220) umfasst, die einen Verbrennungsluftstrom, der der Brennkammer (114) zugeführt wird, basierend auf einer offenen Position der Kompressoreinlassleitschaufeln (112A), die an der Gasgeneratorturbine (110) befestigt sind, einer Drehzahl der Gasgeneratorturbine (110) und einer Kompressoreinlasstemperatur berechnet, den Brennstoffstrom, der der Brennkammer (114) zugeführt wird, basierend auf der Drehzahl der Leistungsturbine (120) berechnet, und ein Brennstoff-LuftVerhältnis in Echtzeit als Flammenreferenz basierend auf dem berechneten Verbrennungsluftstrom und Brennstoffstrom berechnet.

## Revendications

1. Procédé de commande de chambre de combustion pour commander la combustion dans une chambre de combustion (114) équipée d'une unité de combustion à diffusion (F1) et d'une pluralité d'unités de combustion prémélangée (F21-F24), le procédé de commande de chambre de combustion étant utilisé pour une turbine à gaz à arbres multiples constituée :
d'une turbine de générateur à gaz (110) sur un premier arbre (AX1) incluant un compresseur (112) qui alimente de l'air comprimé, la chambre de combustion (114) qui est alimentée avec un combustible et avec l'air comprimé refoulé depuis les compresseurs (112), et une turbine à haute pression (116), qui est alimentée avec les gaz de combustion brûlés dans la chambre de combustion (114), pour entraîner le compresseur (112) ; et
d'une turbine de puissance (120) incluant une turbine à basse pression (122) sur un second arbre (AX2) séparé du premier arbre (AX1), qui est entraînée par les gaz de combustion refoulés depuis la turbine de générateur à gaz (110),
**caractérisé en ce que** le procédé de commande de chambre de combustion comprend les étapes suivantes, exécutées en utilisant une unité de commande d'allumage/extinction (220) d'un contrôleur de combustion (200), consistant à :
calculer un débit d'air de combustion alimenté à la chambre de combustion (114) en se basant sur une position ouverte des aubes de guidage d'entrée (112A) du compresseur, attachées à la turbine de générateur à gaz (110), sur la vitesse de rotation de la turbine générateur à gaz (110) et sur la température atmosphérique ;
calculer un débit de combustible alimenté à la chambre de combustion (114) en se basant sur la vitesse de rotation de la turbine de puissance (120) ; et calculer un rapport combustible/air en temps réel à titre de référence de flamme en se basant sur le débit d'air de combustion et sur le débit de combustible calculé.

2. Procédé de commande de chambre de combustion selon la revendication 1, dans lequel la demande de débit de combustible pour l'unité de combustion à diffusion (F1) et pour chacune des unités de combustion prémélangée (F21-F24) sont calculées par un rapport de combustion prémélangée qui est préalablement fixé en accord avec une référence de commande de flamme, FCR, en utilisant l'unité fonctionnelle de demande de débit de combustible, FFD, pour chacune des unités de combustion (230) du contrôleur de combustion (200).

3. Procédé de commande de chambre de combustion selon la revendication 2, dans lequel l'unité fonctionnelle de la demande de débit de combustible pour chacune des unités de combustion (230) fixe une valeur minimum locale, FCRRLMN, et une valeur maximum locale, FCRRLMX, à titre de valeurs de limitation pour restreindre la référence de flamme, FCR, délivrée par l'unité de commande d'allumage/extinction tout en changeant la valeur minimum locale, FCRRLMN, et la valeur maximum locale, FCRRLMX, en réponse au transfert du mode de combustion.

4. Procédé de commande de chambre de combustion selon la revendication 3, dans lequel l'unité fonctionnelle de la demande de débit de combustible pour chacune des unités de combustion (230) compare la référence de flamme, FCR, délivrée par l'unité de commande d'allumage/extinction, la valeur minimum locale, FCRRLMN, et la valeur maximum locale, FCRRLMX, et utilise la médiane de ces valeurs à titre de nouvelle référence de flamme, FCRRL.

5. Procédé de commande de chambre de combustion selon la revendication 4, dans lequel quand la valeur minimum locale, FCRRLMN, et la valeur maximum locale, FCRRLMX, ont été changées lors du transfert du mode de combustion, l'unité fonctionnelle de la demande de débit de combustible pour chacune des unités de combustion (230) supprime un taux de changement de la référence de flamme de manière à rendre constant le taux de changement et délivre la référence de flamme à taux de changement limité, FCRRL.

6. Procédé de commande de chambre de combustion selon la revendication 2, dans lequel l'unité fonctionnelle de la demande de débit de combustible pour chacune des unités de combustion (230) délivre une demande de débit de combustible uniforme vers chacune des unités de combustion prémélangée (F21-F24) en réponse au transfert du mode de combustion ordonné par l'unité de commande d'allumage/extinction.

7. Contrôleur de chambre de combustion destiné à commander la combustion dans une chambre de combustion (114) équipée d'une unité de combustion à diffusion (F1) et d'une pluralité d'unités de combustion prémélangée (F21-F24), le contrôleur de chambre de combustion étant utilisé pour une turbine à gaz à arbres multiples constituée :
d'une turbine de générateur à gaz (110) sur un premier arbre (AX1) incluant un compresseur (112) qui alimente de l'air comprimé, la chambre de combustion (114) qui est alimentée avec un combustible et avec l'air comprimé refoulé depuis le compresseur (112), et une turbine à haute pression (116), qui est alimentée avec des gaz de combustion brûlés dans la chambre de combustion (114), pour entraîner le compresseur (112) ; et
d'une turbine de puissance (120) sur un second arbre (AX2) séparé du premier arbre (AX1) incluant une turbine à basse pression (122) qui est entraînée par les gaz de combustion refoulés par la turbine de générateur à gaz (110),
**caractérisé en ce que** le contrôleur de chambre de combustion (200) comprend une unité de commande d'allumage/extinction (220) qui calcule le débit d'air de combustion alimenté à la chambre de combustion (114) en se basant sur une position ouverte des aubes de guidage d'entrée (112A) du compresseur, attachées à la turbine de générateur à gaz (110), sur la vitesse de rotation de la turbine de générateur à gaz (110) et sur la température d'entrée du compresseur, calcule le débit de combustible alimenté à la chambre de combustion (114) en se basant sur la vitesse de rotation de la turbine de puissance (120), et calcule un rapport combustible/air en temps réel à titre de référence de flamme en se basant sur le débit d'air de combustion et sur le débit de combustible calculé.
